# EUROPEAN PATENT APPLICATION

(11) **EP 4 725 840 A1**
(43) Date of publication of application: **15.04.2026**
(21) Application number: 25203828.6
(22) Date of filing: 22.09.2025
(51) Int. Cl.: B64D 13/06

(54) **LOW PRESSURE AIR CYCLE ENVIRONMENTAL CONTROL SYSTEM**

(30) Priority: 08.10.2024 US 202418909422
(71) Applicant: Hamilton Sundstrand Corporation, Charlotte, NC 28217-4578 (US)
(72) Inventor: LIAO, Xiaohong, Andover, 06232 (US); BRUNO, Louis J., Ellington, 06029 (US); ERNST, Jeffrey, Wethersfield, 06109 (US)
(74) Representative: Dehns

(57) **Abstract**

An environmental control system of a vehicle includes an inlet (22) configured to receive a medium and an outlet for receiving a conditioned form of the medium. The conditioned form of the medium at the outlet is for a cabin of the vehicle. A thermodynamic device (40) in fluid communication with the inlet (22). includes a compressor (42) having a compressor outlet (52) and a turbine (44) having a turbine inlet (45). The turbine (44) and the compressor (42) are operably coupled by a shaft. The compressor outlet (52) is fluidly connected to the turbine inlet (45) such that at least a portion of the medium is provided to the compressor (42) and the turbine (44) in series. The outlet and the turbine (44) are arranged in parallel relative to a flow of the medium, and the flow of the medium at a location downstream from the turbine (44) is configured as a heat sink to cool the medium to be provided to the cabin.

## Description

### BACKGROUND

Embodiments of the disclosure relate to environmental control systems, and more specifically to an environmental control system of an aircraft.

Contemporary aircraft have bleed air systems that take hot air from the engines of the aircraft for use in other systems on the aircraft including environmental control systems (ECS) such as air-conditioning, pressurization, and de-icing. The ECS can include limits on the pressure or temperature of the bleed air received from the bleed air systems. Currently, aircraft engine bleed systems draw air having a pressure far exceeding the pressure demand of a load, such as more than 80 psig for example. By drawing air at such high temperatures and pressures, enough expansion of the airflow may be performed to achieve sufficient cooling capacity. Existing ECS architectures are not suitable for use with airflows having a significantly reduced pressure.

### SUMMARY

According to an embodiment, an environmental control system of a vehicle includes an inlet configured to receive a medium and an outlet for receiving a conditioned form of the medium. The conditioned form of the medium at the outlet is for a cabin of the vehicle. A thermodynamic device in fluid communication with the inlet. includes a compressor having a compressor outlet and a turbine having a turbine inlet. The turbine and the compressor are operably coupled by a shaft. The compressor outlet is fluidly connected to the turbine inlet such that at least a portion of the medium is provided to the compressor and the turbine in series. The outlet and the turbine are arranged in parallel relative to a flow of the medium, and the flow of the medium at a location downstream from the turbine is configured as a heat sink to cool the medium to be provided to the cabin.

In addition to one or more of the features described above, or as an alternative to any of the foregoing embodiments, the medium provided to the outlet is at an intermediate pressure and, the intermediate pressure is greater than ambient pressure and less than a pressure of the medium at the inlet.

In addition to one or more of the features described above, or as an alternative to any of the foregoing embodiments, a heat exchanger having a heat exchanger outlet is fluidly connected to and arranged upstream from both the turbine and the outlet for receiving the conditioned form of the medium.

In addition to one or more of the features described above, or as an alternative to any of the foregoing embodiments, a first portion of flow of the medium is provided to the outlet from the heat exchanger outlet and a second portion of the flow of the medium is provided to the turbine inlet from the heat exchanger outlet. The environmental control system includes another heat exchanger located downstream from and fluidly connected to the turbine. The flow of the medium is configured as the heat sink to cool the medium to be provided to the cabin at the another heat exchanger.

In addition to one or more of the features described above, or as an alternative to any of the foregoing embodiments, the outlet and the compressor are arranged in series relative to at least a portion of the flow of the medium.

In addition to one or more of the features described above, or as an alternative to any of the foregoing embodiments, the outlet and the compressor are arranged in parallel relative to the flow of the medium.

In addition to one or more of the features described above, or as an alternative to any of the foregoing embodiments, a heat exchanger having a heat exchanger outlet is arranged upstream from the compressor and the outlet and the compressor are fluidly coupled to the heat exchanger outlet in parallel.

In addition to one or more of the features described above, or as an alternative to any of the foregoing embodiments, at least one air-liquid heat exchanger is operable to condition the flow of the medium.

In addition to one or more of the features described above, or as an alternative to any of the foregoing embodiments, the at least one air-liquid heat exchanger includes a first air-liquid heat exchanger arranged downstream from and fluidly connected to the compressor outlet. The first air-liquid heat exchanger is part of a first liquid loop and the medium is cooled within the first air-liquid heat exchanger.

In addition to one or more of the features described above, or as an alternative to any of the foregoing embodiments, the at least one air-liquid heat exchanger includes a second air-liquid heat exchanger arranged downstream from and fluidly connected to the turbine. The second air-liquid heat exchanger is part of a second liquid loop and the medium is heated within the second air-liquid heat exchanger.

In addition to one or more of the features described above, or as an alternative to any of the foregoing embodiments, the first liquid loop is distinct from the second liquid loop.

In addition to one or more of the features described above, or as an alternative to any of the foregoing embodiments, the at least one air-liquid heat exchanger is arranged downstream from and is fluidly connected to an outlet of the turbine and the medium is heated within the at least one air-liquid heat exchanger.

In addition to one or more of the features described above, or as an alternative to any of the foregoing embodiments, the first liquid loop is the second liquid loop.

In addition to one or more of the features described above, or as an alternative to any of the foregoing embodiments, another outlet is fluidly coupled to an outlet of the turbine and is configured to receive a flow output from the turbine.

According to an embodiment, a method of operating an environmental control system includes receiving a medium at an inlet, conditioning the medium downstream from the inlet, dividing the medium such that a first portion of the medium is provided to an outlet and a second portion of the medium is provided to a turbine in parallel, and cooling the first portion of the medium with the second portion of the medium at a location downstream from the turbine.

In addition to one or more of the features described above, or as an alternative to any of the foregoing embodiments, the first portion is at an intermediate pressure.

In addition to one or more of the features described above, or as an alternative to any of the foregoing embodiments, compressing the medium at a compressor, wherein dividing the medium occurs downstream from the compressing the medium.

In addition to one or more of the features described above, or as an alternative to any of the foregoing embodiments, only the second portion of the medium is provided to a compressor and the compressor is operably coupled to the turbine via a shaft.

In addition to one or more of the features described above, or as an alternative to any of the foregoing embodiments, conditioning the medium downstream from the inlet further comprises cooling the medium using at least one of a secondary medium and a liquid.

In addition to one or more of the features described above, or as an alternative to any of the foregoing embodiments, delivering at least part of the second portion of the medium to another load.

### BRIEF DESCRIPTION OF THE DRAWINGS

The subject matter is particularly pointed out and distinctly claimed in the claims at the conclusion of the specification. The forgoing and other features, and advantages thereof are apparent from the following detailed description taken in conjunction with the accompanying drawings in which:
FIG. 1 is a schematic diagram of an environmental control system according to an embodiment;
FIG. 2 is a schematic diagram of an environmental control system according to another embodiment; and
FIG. 3 is a schematic diagram of an environmental control system according to yet another embodiment.

### DETAILED DESCRIPTION

A detailed description of one or more embodiments of the disclosed apparatus and method are presented herein by way of exemplification and not limitation with reference to the FIGS.

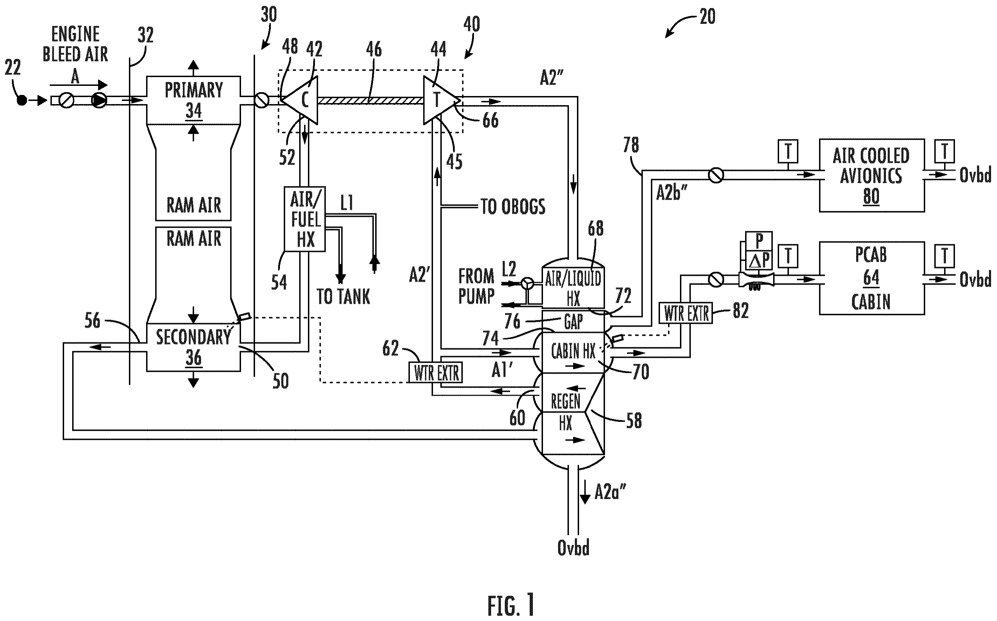

With reference now to the FIG. 1, a schematic diagram of a portion of an environment control system (ECS) 20, such as an air conditioning unit or pack for example, is depicted according to a non-limiting embodiment. Although the environmental control system or ECS pack 20 is described with reference to an aircraft, alternative applications, such as another vehicle for example, are also within the scope of the disclosure. As shown, the ECS 20 may be configured to receive a medium A at an inlet 22 and may provide a conditioned form of the medium A to one or more loads during normal operation. In embodiments where the ECS 20 is used in an aircraft application, the medium A1 may be bleed air, which is pressurized air originating from i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn. In an embodiment, only a conditioned form of the medium A is provided at an outlet of the ECS 20 to the one or more loads.

The environmental control system 20 may include a RAM air circuit 30 including a shell or duct, illustrated schematically at 32, within which one or more heat exchangers are located. The shell 32 can receive and direct a medium, such as ram air AR for example, through a portion of the ECS 20. The one or more heat exchangers are devices built for efficient heat transfer from one medium to another. Examples of the type of heat exchangers that may be used, include, but are not limited to, double pipe, shell and tube, plate, plate and shell, adiabatic shell, plate fin, pillow plate, and fluid heat exchangers.

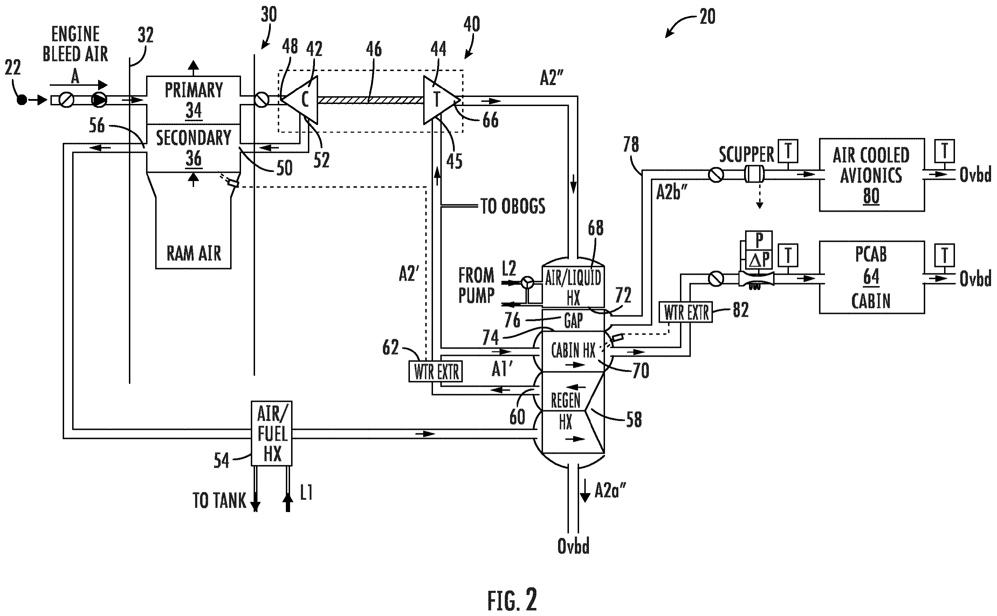

The one or more heat exchangers arranged within the shell 32 may be referred to as ram heat exchangers. In the illustrated, non-limiting embodiment, the ram heat exchangers include a first or primary heat exchanger 34 and a second or secondary heat exchanger 36. However, any suitable number of heat exchangers may be contemplated herein. Within the heat exchangers 34, 36, a secondary medium, such as ram air or outside air for example, acts as a heat sink to cool a medium passing there through, for example the medium A. Although the plurality of ram air heat exchangers 34, 36 are illustrated as being arranged in parallel in FIG. 1 relative to a flow of ram air, in other embodiments, such as shown in FIG. 2, the ram air heat exchangers 34, 36 may be arranged in series or a combination of series and parallel.

The ECS 20 additionally includes at least one thermodynamic device 40. Each thermodynamic device 40 is a mechanical device that includes components for performing thermodynamic work on a medium (e.g., extracts work from or applies work to the first medium A1, by raising and/or lowering pressure and by raising and/or lowering temperature). Examples of a thermodynamic device include an air cycle machine, a two-wheel air cycle machine, a three-wheel air cycle machine, a four-wheel air cycle machine, etc. In the illustrated, non-limiting embodiments, the ECS 20 includes a compressor 42 and a turbine 44 operably coupled thereto by a shaft 46. In such embodiments, energy extracted from the medium A within the turbine 44 may be used to drive the compressor 42.

The compressor 42 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. The turbine 44 is a mechanical device that expands a medium and extracts work therefrom (also referred to as extracting energy). This extracted energy is transmitted to the shaft 46 of the turbine 44 and the other components operably coupled thereto, such as the compressor 42 for example.

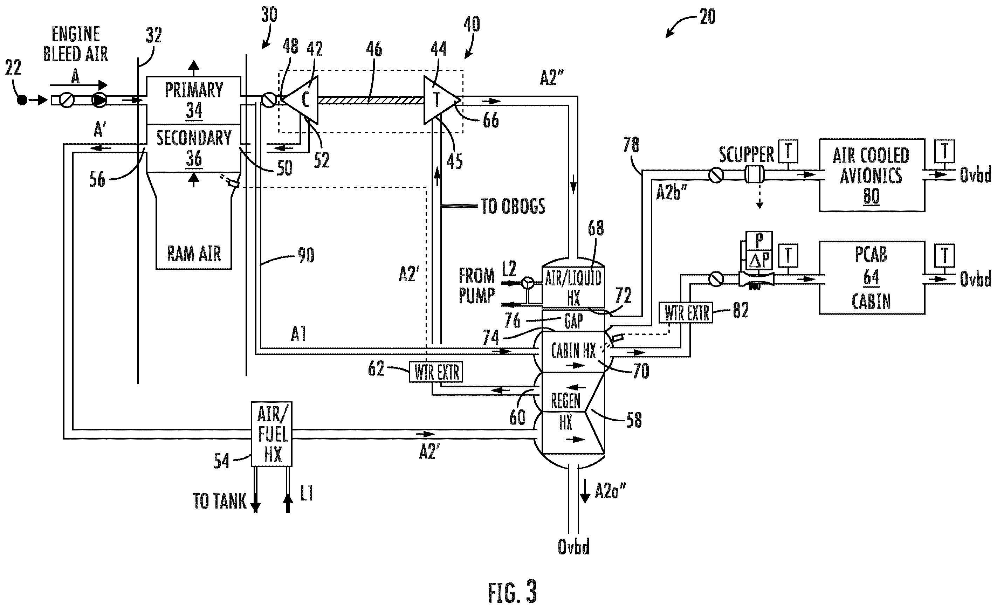

As shown, the medium A provided at the inlet 22 may be cooled within the first heat exchanger 34 before being delivered to the thermodynamic device 40. In the illustrated, non-limiting embodiment, the cooled medium A output from the heat exchanger outlet of the primary heat exchanger 34 is provided to an inlet 48 of the compressor 42. The act of compressing the medium A heats and increases the pressure of the medium A to form a compressed medium A'. An inlet 50 of the second heat exchanger 36 is arranged downstream from and is fluidly connected to an outlet 52 of the compressor 42. The compressed medium A' output from the compressor 42 is cooled within the second heat exchanger 36. In an embodiment, such as shown in FIGS. 2 and 3, the second heat exchanger 36 is located directly downstream from the compressor outlet 52.

In an embodiment, the ECS 20 includes at least one air-liquid heat exchanger operable to condition the flow of the medium. In some embodiments, a first air-liquid heat exchanger 54 may be located downstream from and fluidly connected to the outlet 56 of the second heat exchanger 36 relative to the flow of compressed medium A'. However, in other embodiments, the first air-liquid heat exchanger 54 is located directly downstream from and is fluidly connected to the outlet 52 of the compressor 42 and is located upstream from and fluidly connected to an inlet 50 of the second heat exchanger 36.

Within the first air-liquid heat exchanger 54, thermal energy is transferred between the compressed medium A' and a liquid L1 provided from a first liquid loop. In the illustrated, non-limiting embodiment, the first liquid L1 is fuel provided from or to be provided to a fuel tank (not shown). However, any suitable liquid, such as a liquid used to condition, for example cool, one or more loads of the vehicle is also contemplated herein. In an embodiment, heat is transferred from the compressed medium A' to the first liquid L1 at the first air-liquid heat exchanger 54.

In an embodiment, a regeneration heat exchanger 58 is arranged downstream from both the secondary heat exchanger 36 and the first air-liquid heat exchanger 54. The compressed medium A' output from whichever of the secondary heat exchanger 36 and the first air-liquid heat exchanger 54 is located further downstream may be further cooled within the regeneration heat exchanger 58. In the illustrated, non-limiting embodiment, the secondary fluid used to cool the compressed medium A' within the regeneration heat exchanger 58 is a portion of the flow of the medium A output from the regeneration heat exchanger 58, as will be described in more detail below. Within the regeneration heat exchanger 58, the compressed medium A' may be cooled such that moisture therein condenses. From the outlet 60 of the regeneration heat exchanger 58, the wet compressed medium A' may be provided to a water extractor 62 to remove any free moisture therefrom.

As shown, in an embodiment, the flow of compressed medium A' at a location downstream from the water extractor 62 is split into a first portion A1' ultimately to be provided to a cabin 64 and a second portion A2' to be used to condition the first portion A1'. From the water extractor 62, the second portion A2' of the compressed medium A' may be provided to the turbine 44 of the thermodynamic device 40. Within the turbine 44, energy extracted from the second portion A2' of the compressed medium A' is used to drive the compressor 42 via the shaft 46. Accordingly, the both the pressure and the temperature of the second portion A2' of the compressed medium is reduced at the turbine 44 to form an expanded medium A2".

In an embodiment, a second air-liquid heat exchanger 68 is located downstream from the turbine outlet 66 relative to the flow of the expanded medium A2". A2" has the coldest temperature of the entire embodiment, so it can be used to cool all kinds of loads of the vehicle, such as cabin, power electronics, etc. At the second air-liquid heat exchanger 68, the expanded medium A2" is arranged in a heat transfer relationship with another liquid L2, PAO for example, provided from another liquid loop, such as used to cool one or more loads of the vehicle. Although heat exchanger 68 is illustrated and described herein as being the second air-liquid heat exchanger of the ECS 20, in some embodiments, the ECS 20 may not include heat exchanger 54 such that the heat exchanger 68 is the first air-liquid heat exchanger relative to the flow of the medium A.

Regardless of the source of the liquid L2, within the second air-liquid heat exchanger 68, thermal energy is transferred between the expanded medium A2" and the liquid L2. In an embodiment, the expanded medium A2" is heated by the liquid L2 and the resulting cooler liquid L2 may then be directed to one or more heat loads of the liquid loop. Because heat is transferred from the compressed medium A' to the liquid L1 of the first liquid loop at the first air-liquid heat exchanger 54, and heat is transferred from the liquid L2 of the second liquid loop to the expanded medium A2" at the second air-liquid heat exchanger 68, the first liquid loop including the first liquid L1 may be considered a hot or heating liquid loop and the second liquid loop including the second liquid L2 may be considered a cold or cooling liquid loop.

A third heat exchanger 70, such as used to condition the flow of medium provided to the cabin 64 for example, may be located downstream from the second air-liquid heat exchanger 68 relative to the flow of the expanded medium A2". An inlet 74 of the third heat exchanger 70 may be fluidly connected directly to an outlet 72 of the second air-liquid heat exchanger 68. However, in some embodiments, the third heat exchanger 70 is physically spaced from the second air-liquid heat exchanger 68 such that a gap or clearance 76 exists between the second air-liquid heat exchanger 68 and the third heat exchanger 70.

The heated expanded medium A2" provided at the outlet 72 of the second air-liquid heat exchanger 68 into the gap 76 upstream from the third heat exchanger 70 may be divided into multiple flows, as shown in the FIGS. A first portion A2a" of the expanded medium may be provided to the third heat exchanger 70. In such embodiments, a conduit 78 may fluidly couple the gap 76 and one or more loads 80 of the aircraft requiring cooling, such as air-cooled avionics for example such as via another outlet. A second portion A2b" of the expanded medium may be delivered to another load 80 via the conduit 78. In an embodiment, a valve is arranged within the conduit 78 to selectively control the flow of the second portion A2b" of the expanded medium, if any, provided to the load 80. However, it should be understood that embodiments where the heated expanded medium A2" provided at the outlet 72 of the second air-liquid heat exchanger 68 is not divided, and therefore the entire flow thereof is provided to the third heat exchanger 70, are also contemplated herein.

Within the third heat exchanger 70, the first portion A2a" of the expanded medium is arranged in a heat exchange relationship with the first portion A1' of the compressed medium output from the water extractor 62. In an embodiment, heat from the first portion A1' of the compressed medium is transferred to the first portion A2a" of the expanded medium to cool the first portion A1' of the compressed medium to a desired temperature. The first portion A1' of the compressed medium output from the third heat exchanger 70 may then be provided to the cabin 64. In an embodiment, the first portion A1' of the compressed medium output from the third heat exchanger 70 is configured to pass through another water extractor 82 to remove any free moisture therefrom before being delivered to the cabin 64.

A second inlet of the regeneration heat exchanger 58 may be fluidly connected to an outlet of the third heat exchanger 70 such that the first portion A2a" of the expanded medium output from the third heat exchanger 70 is provided to the third heat exchanger 70 and the regeneration heat exchanger 58 in series. As shown, in an embodiment, the second inlet of the regeneration heat exchanger 58 is located directly downstream from the third heat exchanger 70 relative to the flow of the first portion A2a" of the expanded medium. Further, the third heat exchanger 70 may be mounted directly adjacent to the regeneration heat exchanger 58. As previously noted, within the regeneration heat exchanger 58, the first portion A2a" of the expanded medium is configured to absorb heat from the compressed medium A1'. The outlet of the second pass of the regeneration heat exchanger 58 may be fluidly connected to the atmosphere outside of the aircraft such that the heated first portion A2a" of the expanded medium output therefrom may be exhausted overboard.

In the various environmental control systems shown in the illustrated, non-limiting embodiments, energy is not extracted from the flow of medium that is ultimately provided to the cabin 64. Accordingly, the pressurized and conditioned medium provided to the cabin 64 is drawn from a location upstream of the turbine 44 such that the medium delivered to the cabin 64 was not provided to the turbine 44 of the thermodynamic device 40.

With reference to the ECS 20 shown in FIG. 1, during operation, a flow of pressurized medium A is provided from a source to the ECS 20 via the inlet 22. In an embodiment, the flow of medium A is drawn from a fan stage or a middle stage of an engine of the aircraft. From the inlet 22, the hot medium A is cooled within the primary heat exchanger of the ram air circuit 30 via a flow of ram air. The resulting cooler medium A output from the primary heat exchanger 34 is then provided to the inlet of the compressor 42. The act of compressing the medium A heats and/or increases the pressure of the medium A. The compressed medium A' output from the compressor 42 usually has the highest pressure of the entire embodiment.

The compressed medium A' provided at the outlet 52 of the compressor 42 may then pass through the first air-liquid heat exchanger 54. Within the first air-liquid heat exchanger 54, heat is removed from the compressed medium A' via the first liquid L1. From the first air-liquid heat exchanger 54, the compressed medium A' may be provided to the secondary heat exchanger 36 of the ram air circuit 30. Within the secondary heat exchanger 36, the cool compressed medium A' is further cooled by a flow of ram air. The flow of ram air may be the same flow of ram air used to cool the medium A at the primary heat exchanger 34 or may be different therefrom. In an embodiment, the compressed first medium A1' is cooled within the secondary heat exchanger 36 to approximately ambient temperature.

This cool compressed medium A' enters the regeneration heat exchanger 58, where it is cooled by a portion A2a" of an expanded flow of the medium output from the turbine 44. As the compressed first medium A1' is cooled within the regeneration heat exchanger 58, moisture is condensed from the compressed medium A'. From the outlet of the regeneration heat exchanger 58, the compressed medium A' is delivered to the water extractor 62 where the free moisture in the compressed first medium A1' is removed.

A first portion A1' of the compressed medium output from the water extractor enters a third heat exchanger 70 and a second portion A2' of the compressed medium is provided to the turbine inlet 45. Within the turbine 44, the second portion A2' of the compressed medium is expanded and work is extracted therefrom to form an expanded first medium A2". During its expansion within the turbine 44, the second portion A2' of the compressed medium is further cooled. In an embodiment, the expanded medium A2" output from the outlet of the turbine 44 has a subzero temperature.

This cold flow of expanded medium A2" is then provided to the second air-liquid heat exchanger 68 where the expanded medium A2" is configured to absorb heat from the second liquid L2. At least a portion of the resulting cool expanded medium A2", such as a first portion A2a" of the expanded medium for example, is then provided to the third heat exchanger 70. Within the third heat exchanger 70, the first portion A1' of the compressed medium is cooled by the portion A2a" of the expanded medium output from the turbine 44. From the third heat exchanger 70, additional moisture may be removed from the cool first portion A1' of the compressed medium at a water extractor 82 before being output from the ECS 20, such as for delivery to the cabin 64. The resulting warmer first portion A2a" of the expanded medium output from the third heat exchanger 70 is then provided to the regeneration heat exchanger 58 where it further absorbs heat from the compressed medium A1' before being exhausted overboard.

Operation of the ECS 20 disclosed in FIG. 2 is substantially similar to that the system of FIG. 1. However, in the system of FIG. 2, the compressed medium A' is cooled first at the secondary heat exchanger 36 and then at the first air-liquid heat exchanger 54 rather than in the reverse order shown in FIG. 1. Further, in the non-limiting embodiment of FIG. 2, the ram air flow is provided to the secondary heat exchanger 36 and the primary heat exchanger 34 in series before being exhausted overboard.

The ECS 20 disclosed in FIG. 3 is substantially similar to that disclosed in FIG. 2. However, the ECS 20 of FIG. 3 includes a bypass conduit 90 extending from upstream of the compressor 42 directly to the third heat exchanger 70. In the illustrated, non-limiting embodiment, an inlet of the bypass conduit is arranged downstream from the primary heat exchanger 34 relative to the flow of medium A and upstream from the inlet 48 of the compressor 42. During normal operation of the system of FIG. 3, the flow of pressurized medium A provided to the ECS 20 via the inlet 22 is delivered to primary heat exchanger 34 where it is cooled by a flow of ram air. A first portion A1 of the resulting cooler medium output from the primary heat exchanger 34 may then flow to the bypass conduit 90, and a second portion A2 of the medium output from the primary heat exchanger 34 is delivered to the compressor 42. The flow within the bypass conduit bypasses the compressor 42, the secondary heat exchanger 36, the first air-liquid heat exchanger 54, and the regeneration heat exchanger 58. However, the second portion A2 of the medium A is compressed within the compressor 42 to form a compressed second portion A2' and is then cooled within each of the secondary heat exchanger 36, the first air-liquid heat exchanger 54, and the regeneration heat exchanger 58. As the compressed second portion A2' of the medium is cooled within the regeneration heat exchanger 58, moisture is condensed therefrom. From the outlet of the regeneration heat exchanger 58, the compressed second portion A2' of the medium is delivered to the water extractor 62 where the free moisture in the compressed second portion A2' of the medium is removed.

From the water extractor 62, the entire flow of the compressed second portion A2' of the medium is delivered to the turbine 44. Within the turbine 44, the compressed second portion A2' of the medium is expanded and work is extracted therefrom to form an expanded second portion A2" of the medium. During its expansion within the turbine 44, the compressed second portion A2' of the medium is further cooled.

The cold flow of the expanded second portion A2" of the medium is then provided to the second air-liquid heat exchanger 68 where the expanded second portion A2" of the medium is configured to absorb heat from the second liquid L2. At least a portion of the resulting expanded second portion A2" of the medium, such as a first part A2a" for example, is then provided to the third heat exchanger 70. Within the third heat exchanger 70, the medium A is cooled by the first part A2a" of the expanded second portion A2" of the medium output from the turbine 44. From the third heat exchanger 70, additional moisture may be removed from the cool medium A at a water extractor 82 before the medium A is delivered to a load, such as the cabin 64. The resulting warmer first part A2a" of the expanded second portion A2" of the medium output from the third heat exchanger 70 is then provided to the regeneration heat exchanger 58 where it further absorbs heat from the compressed second portion A2' of the medium before being exhausted overboard.

In each of the disclosed embodiments, the ECS 20 does not require a flow of a second medium to provide power to the thermodynamic device 40. An ECS 20 as described herein may achieve sufficient cooling capacity when the pressure of the medium provided at the inlet 22 of the ECS is an intermediate pressure, such as less than about 50psi, and in some embodiments, less than about 45 psi, or less than about 40 psi. In an embodiment, the pressure at the medium A at the inlet is around 35psi. Further, in some embodiments, the flow of medium A provided to the inlet 22 has not been conditioned, such as via a precooler heat exchanger for example. Rather, the temperature of the medium A at the inlet 22 is substantially identical to the temperature of the medium A at its source, excluding temperature loss due to travel. In the illustrated, non-limiting embodiment, the flow of medium within the ECS 20 is divided between at least two loads, one having a higher backpressure than the other. By splitting the flow of medium between two loads, such as the cabin 64 and load 80 for example, the pressurized flow output from the turbine 44 may be provided to the load having a lower back-pressure and the cabin cooling is achieved using a flow tapped from a part of the ECS having a higher pressure. Accordingly, the flow of medium provided to the cabin 64 is drawn from a location upstream of the turbine 44, such as between the compressor 42 and the turbine 44 for example, or in some embodiments, upstream of both the compressor 42 and the turbine 44.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system of a vehicle comprising:
an inlet (22) configured to receive a medium;
an outlet for receiving a conditioned form of the medium, wherein the conditioned form of the medium at the outlet is to be provided to a cabin of the vehicle;
a thermodynamic device (40) in fluid communication with the inlet (22), the thermodynamic device (40) including a compressor (42) having a compressor outlet (52) and a turbine (44) having a turbine inlet (45), the turbine (44) and the compressor (42) being operably coupled by a shaft, wherein the compressor outlet (52) is fluidly connected to the turbine inlet (45) such that at least a portion of the medium is provided to the compressor (42) and the turbine (44) in series; and
wherein the outlet and the turbine (44) are arranged in parallel relative to a flow of the medium, and the flow of the medium at a location downstream from the turbine (44) is configured as a heat sink to cool the medium to be provided to the cabin.

2. The environmental control system of claim 1, wherein the medium provided to the outlet is at an intermediate pressure, the intermediate pressure being greater than ambient pressure and less than a pressure of the medium at the inlet (22).

3. The environmental control system of claim 1 or 2, further comprising a heat exchanger (34, 36), the heat exchanger (34, 36) having a heat exchanger outlet fluidly connected to and arranged upstream from both the turbine (44) and the outlet for receiving the conditioned form of the medium, and optionally wherein a first portion of flow of the medium is provided to the outlet from the heat exchanger outlet and a second portion of the flow of the medium is provided to the turbine inlet (45) from the heat exchanger outlet, the environmental control system further comprising another heat exchanger (34, 36) located downstream from and fluidly connected to the turbine (44), wherein the flow of the medium is configured as the heat sink to cool the medium to be provided to the cabin at the another heat exchanger.

4. The environmental control system of any of claims 1-3, wherein the outlet and the compressor (42) are arranged in series relative to at least a portion of the flow of the medium.

5. The environmental control system of any of claims 1-3, wherein the outlet and the compressor (42) are arranged in parallel relative to the flow of the medium, and optionally further comprising a heat exchanger (34, 36) having a heat exchanger outlet, the heat exchanger (34, 36) being arranged upstream from the compressor (42), wherein the outlet and the compressor (42) are fluidly coupled to the heat exchanger outlet in parallel.

6. The environmental control system of any preceding claim, further comprising at least one air-liquid heat exchanger operable to condition the flow of the medium.

7. The environmental control system of claim 6, wherein the at least one air-liquid heat exchanger includes a first air-liquid heat exchanger (54) arranged downstream from and fluidly connected to the compressor outlet (52), the first air-liquid heat exchanger being part of a first liquid loop, wherein the medium is cooled within the first air-liquid heat exchanger (54), and optionally wherein the at least one air-liquid heat exchanger includes a second air-liquid heat exchanger (68) arranged downstream from and fluidly connected to the turbine (44), the second air-liquid heat exchanger (68) being part of a second liquid loop, wherein the medium is heated within the second air-liquid heat exchanger (68), and optionally wherein the first liquid loop is distinct from the second liquid loop.

8. The environmental control system of claim 6 or 7, wherein the at least one air-liquid heat exchanger is arranged downstream from and is fluidly connected to an outlet of the turbine (44), wherein the medium is heated within the at least one air-liquid heat exchanger.

9. The environmental control system of claim 7, wherein the first liquid loop is the second liquid loop.

10. The environmental control system of any preceding claim, further comprising another outlet, the another outlet being fluidly coupled to and configured to receive a flow output from the turbine (44).

11. A method of operating an environmental control system comprising:
receiving a medium at an inlet (22);
conditioning the medium downstream from the inlet (22);
dividing the medium such that a first portion of the medium is provided to an outlet and a second portion of the medium is provided to a turbine (44) in parallel; and
cooling the first portion of the medium with the second portion of the medium at a location downstream from the turbine (44).

12. The method of claim 11, wherein the first portion is at an intermediate pressure.

13. The method of claim 11 or 12, further comprising compressing the medium at a compressor (42), wherein dividing the medium occurs downstream from the compressing the medium.

14. The method of any of claims 11-13, wherein only the second portion of the medium is provided to a compressor (42), the compressor (42) being operably coupled to the turbine (44) via a shaft.

15. The method of any of claims 11-14, wherein conditioning the medium downstream from the inlet (22) further comprises cooling the medium using at least one of a secondary medium and a liquid, and optionally further comprising delivering at least part of the second portion of the medium to another load.
